# EUROPEAN PATENT SPECIFICATION

(11) **EP 4 203 413 B1**
(45) Date of publication and mention of the grant of the patent: **05.03.2025**
(21) Application number: 22205690.5
(22) Date of filing: 07.11.2022
(51) Int. Cl.: H04L 41/0873, H04L 9/40, H04L 67/1095, H04L 41/08, H04L 41/084

(54) **DEVICE ABNORMALITY DETECTION METHOD AND DEVICE NETWORKING SYSTEM**
VERFAHREN ZUR ERKENNUNG VON ANOMALIEN BEI EINER VORRICHTUNG UND VORRICHTUNGSVERNETZUNGSSYSTEM
PROCÉDÉ ET SYSTÈME DE MISE EN RÉSEAU DE DISPOSITIFS

(30) Priority: 21.12.2021 CN 202111569252
(43) Date of publication of application: 28.06.2023
(73) Proprietor: Zhuhai Pantum Electronics Co., Ltd., Zhuhai, Guangdong (CN)
(72) Inventor: LI, Haixiong, Zhuhai, Guangdong (CN); XIE, Congse, Zhuhai, Guangdong (CN)
(74) Representative: Sun, Yiming

(56) References cited:
- US-A1- 2020 067 774
- US-A1- 2020 382 372
- US-A1- 2021 288 868
- US-B1- 9 542 177

## Description

### TECHNICAL FIELD

The present disclosure generally relates to the field of network security technology and, more particularly, relates to a device abnormality detection method and a device networking system.

### BACKGROUND

Currently, most network devices in local area networks have the problem that the data is easy to be tampered and stolen. In order to ensure network security, the administrators may adopt appropriate security policies for the local area networks. In the existing technology, most security policies may only add a third-party server to manage and control the security of the local area network through the third-party server. Due to special status of the server in the local area network, the security management and control process may face more network security problems, which may not only increase maintenance cost, but also make the management and control fail once the server is down or some abnormality occurs. The patent publication US 9,542,177 B1 relates to ensuring that each of the computer systems in cluster or group is operating in the same state or the same configuration.

### SUMMARY

The invention is defined by the independent claims 1 and 6.

Preferred embodiments are set out in the dependent claims.

One aspect of the present disclosure provides a device abnormality detection method The method includes if ledger data of a specific network device in the plurality of network devices changes, synchronizing, by the specific network device, ledger data after the change or difference data to other network devices than the specific network device in the device networking system, where the specific network device is any network device in the device networking system, and the difference data is changed data in the ledger data; and further includes determining whether the plurality of network devices is abnormal according to the difference data.

Another aspect of the present disclosure provides a device networking system. The system includes a specific network device, configured to, if ledger data of a specific network device in the plurality of network devices changes, synchronize, by the specific network device, ledger data after the change or difference data to other network devices than the specific network device in the device networking system, where the specific network device is any network device in the device networking system, and the difference data is changed data in the ledger data; and the any network device, configured to determine whether the plurality of network devices is abnormal according to the difference data.

Other aspects of the present disclosure may be understood by those skilled in the art in light of the description, the claims, and the drawings of the present disclosure.

### BRIEF DESCRIPTION OF THE DRAWINGS

To clearly describe the technical solutions of various embodiments of the present disclosure, the drawings need to be used for describing various embodiments are described below. Obviously, the drawings in the following description are merely some embodiments of the present disclosure. For those skilled in the art, other drawings may be obtained in accordance with these drawings without creative efforts.
FIG. 1 illustrates a flowchart of a device abnormality detection method provided by exemplary embodiments of the present disclosure.
FIG. 2 illustrates a flowchart of an arbitration method for a master node provided by exemplary embodiments of the present disclosure.
FIG. 3 illustrates a flowchart of another arbitration method for a master node provided by exemplary embodiments of the present disclosure.
FIG. 4 illustrates a structural schematic of a device networking system provided by exemplary embodiments of the present disclosure.

### DETAILED DESCRIPTION

To better understand technical solutions of the present disclosure, embodiments of the present disclosure are described in detail with reference to accompanying drawings.

It should be noted that described embodiments are only a part of embodiments of the present disclosure, rather than all embodiments. Based on embodiments in the present disclosure, all other embodiments obtained by those skilled in the art without creative work shall fall within the protection scope of the present disclosure.

The terms used in embodiments of the present disclosure are only for the purpose of describing specific embodiments and are not intended to limit the present disclosure. The singular forms of "a", "the" and "said" used in embodiments of the present disclosure and the appended claims are also intended to include plural forms, unless the context clearly indicates other meanings.

It can be understood that the term "and/or" used in the specification may only be an association relationship describing associated objects, which means that there may be three types of relationships. For example, A and/or B can mean that: A alone exists, A and B exist at the same time, and B exists alone. In addition, the character "/" in the specification normally indicates that associated objects before and after are in an "or" relationship.

Embodiments embodiment of the present disclosure provide a device abnormality detection method, which may be applied to a device networking system. The device networking system may include a plurality of network devices. In embodiments of the present disclosure, the network device may include, but may not be limited to, an image forming device, such as a smart phone, a Tablet computer, a PC, or other computer devices. Examples of the image forming devices may include ink jet printers, laser printers, light emitting diode (LED) printers, copiers, scanners or MFPs, facsimiles, and multi-functional peripheral (MFP) performing above-mentioned functions in a single device. The image forming device may include an image forming control unit and an image forming unit. The image forming control unit may be configured to control the entire image forming device. The image forming unit may be configured to form images on conveyed sheets under the control of the image forming control unit based on image forming data and developers such as toners stored in consumables.

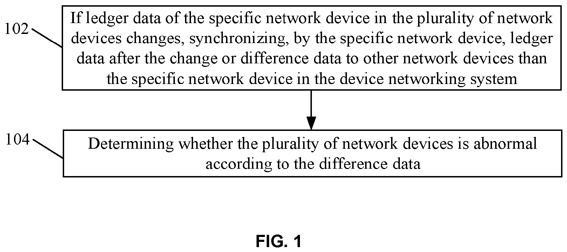

FIG. 1 illustrates a flowchart of a device abnormality detection method provided by exemplary embodiments of the present disclosure. As shown in FIG. 1, the method may include following exemplary steps.

At step 102, if the ledger data of a specific network device in the plurality of network devices changes, the specific network device may synchronize the ledger data after the change or difference data to other network devices than the specific network device in the device networking system. The specific network device may be any network device in the device networking system, and the difference data may be changed data in the ledger data.

In the device networking system, each network device may have own ledger data. If the ledger data of any network device changes, the changed data in the ledger data of the network device may need to be synchronized to other network devices. During the synchronization process, the specific network device may synchronize the ledger data after the change to other network devices in the device networking system; and other network devices may obtain the data which needs to be updated in own ledger data through the ledger data after the change, thereby updating own ledger data. Or the specific network device may also synchronize the changed data in own ledger data, that is, the difference data, to other network devices in the device networking system, and other network devices may directly obtain the data which needs to be updated in own ledger data, thereby updating own ledger data.

In embodiment of the present disclosure, the ledger data may be configured to record the attribute information and the consumption information of the network device. The attribute information of the network device may include the attribute information of the network device itself and/or components included in the network device, for example, may be the identification information such as the device name and model of the network device, and the names and models of the components included in the network device, which may not be limited herein. The consumption information of the network device may include the consumption information of the network device itself and/or components included in the network device. The consumption information may be configured to record the information of consumption during the use of the network device, for example, may be use duration information, consumption information of components included in the network device, or the like, which may not be limited herein.

In embodiments of the present disclosure, the ledger data may include the attribute information and consumption information of the network device. For example, the attribute information may be fixed data in the ledger data, and the consumption information may be variable data in the ledger data. As an optional solution, the attribute information may be the network port of the network device; and the network port may be the port that initiates the synchronization request, for example, port 80; and the consumption information may be port status information. As another optional solution, the attribute information may be the account name, and the consumption information may be remaining online time. Therefore, the difference data may include change attribute information and/or change consumption information. It can be understood that the ledger data may include multiple data combinations including the attribute information and consumption information of the network devices.

It should be noted that, in embodiments of the present disclosure, the specific network device may determine the difference data between the ledger data before the change and the ledger data after the change by comparing the ledger data before the change and the ledger data after the change. In an optional implementation manner, compared with the ledger data before the change, only new data may be added to the ledger data after the change; and the newly added data may be the difference data between the ledger data before the change and the ledger data after the change. For example, the following Table 1 shows the ledger data before the change, and the following Table 2 shows the ledger data after the change, such that the difference data may be data combination including attribute information E and consumption information E1. In another optional implementation, compared with the ledger data before the change, the ledger data after the change may only be reduced, and the reduced data may be the difference data between the ledger data before the change and the ledger data after the change, which may not be limited herein. For example, the following Table 1 shows the ledger data before the change, and the following Table 3 shows the ledger data after the change, such that the difference data may be data combination including attribute information D and consumption information D1, or it is determined that there is no difference data between the ledger data before the change and the ledger data after the change. In another optional implementation, compared with the ledger data before the change, only partial data may be changed in the ledger data after the change. For example, the attribute information may remain unchanged, and the consumption information may be changed, such that it is determined that the difference data between the ledger data before the change and the ledger data after the change may be data combination including the attribute information and changed consumption information. For example, the following Table 1 shows the ledger data before the change, and the following Table 4 shows the ledger data after the change, such that it is determined that the difference data may be data combination including attribute information C and consumption information C2.

**Table 1**

| Number | Attribute information | Consumption information |
|---|---|---|
| 1 | A | A1 |
| 2 | B | B1 |
| 3 | C | C1 |
| 4 | D | D1 |

**Table 2**

| Number | Attribute information | Consumption information |
|---|---|---|
| 1 | A | A1 |
| 2 | B | B1 |
| 3 | C | C1 |
| 4 | D | D1 |
| 5 | E | E1 |

**Table 3**

| Number | Attribute information | Consumption information |
|---|---|---|
| 1 | A | A1 |
| 2 | B | B1 |
| 3 | C | C1 |

**Table 4**

| Number | Attribute information | Consumption information |
|---|---|---|
| 1 | A | A1 |
| 2 | B | B1 |
| 3 | C | C2 |
| 4 | D | D1 |

In the device networking system, the plurality of network devices may include a master node and at least one first network device. The specific network device may be any first network device, and other network devices may include the master node and other first network devices.

As an optional solution, step 102 may include following exemplary steps.

At step 102a, the specific network device may send the difference data to the master node.

At step 102b, the master node may update own current ledger data to the ledger data after the change according to the difference data and send the difference data or the ledger data after the change to other first network devices, such that the other first network devices may update own current ledger data to the ledger data after the change according to the difference data or the changed ledger data.

For example, referring to above-mentioned embodiments, if it is determined that the difference data is the data combination including the attribute information E and consumption information E1, and current ledger data of the master node itself is shown in Table 1, such that the master node may update own current ledger data to the ledger data after the change according to the difference data, as shown in Table 2. After the master node completes the update of own ledger data, the master node may send the difference data to other first network devices. The other first network device may update own ledger data after receiving the difference data sent by the master node. After completing the update of own ledger data, the master node may also send the ledger data after the change to other first network devices. The other first network devices may compare received ledger data after the change with own ledger data of the other first network devices to determine the data that needs to be updated in own ledger data of the other first network devices, thereby updating own data. Also referring to above-mentioned embodiments, the ledger data after the change of the master node is shown in Table 2, and the ledger data of the other first network devices is shown in Table 1. By comparing Table 1 and Table 2, other network devices may determine that the ledger data which needs to be updated is the data combination including the attribute information E and consumption information E1. As another optional solution, step 102 may include following exemplary steps.

At step 102c, the specific network device may send the ledger data after the change to the master node.

At step 102d, the master node may update own current ledger data to the ledger data after the change, determine the difference data according to own current ledger data and the ledger data after the change, and send the difference data or the ledger data after the change to other first network devices, such that the other first network devices may update own current ledger data to the ledger data after the change according to the difference data or the ledger data after the change.

For example, also referring to above-mentioned embodiments, Table 2 shows the ledger data after the change of the specific network device. The specific network device may send the ledger data after the change to the master node. It is assumed that own ledger data of the master node is shown in Table 1, the master node may update own ledger data to obtain the data after the changed as shown in Table 2 and send the data combination including the attribute information E and the consumption information E1, that is, the difference data, to other first network devices, or send the ledger data after the change to other first network devices. The other first network devices may update own ledger data according to the difference data or the ledger data after the change.

In above two solutions, the specific network device may synchronize the difference data to the other first network devices through the master node.

As another optional solution, step 102 may include that the specific network device may send the difference data or the ledger data after the change to the master node and other first network devices, such that the master node and other first network devices may all update own current ledger data to the ledger data after the change according to the difference data or the ledger data after the change. In such solution, the specific network device may not synchronize the difference data through the master node but directly synchronize the difference data to the master node and the other first network devices.

It can be understood from above-mentioned solutions that after the ledger data in any network device in the device networking system changes, the difference data or the ledger data after the change may be synchronized to other network devices in the device networking system; and after the synchronization operation, the ledger data contained in all network devices in the device networking system may be same.

At step 104, whether the plurality of network devices is abnormal may be determined according to the difference data.

In embodiments of the present disclosure, after the synchronization of the ledger data is completed, any network device in the device networking system may determine whether the plurality of network devices is abnormal according to the difference data, that is, determine whether there is an abnormal device in the device networking system. In embodiments of the present disclosure, when the ledger data in any network device in the device networking system changes, that is, after the difference data is generated in the device networking system, the difference data may need to be synchronized to all networks in the device networking system Therefore, all network devices in the device networking system may determine whether an abnormality occurs in the device networking system according to the difference data.

In embodiments of the present disclosure, after determining the abnormal network device, the abnormal network device may be located, and the security policy of the abnormal network device may be restored.

As an optional solution, step 104 may include determining whether the difference data satisfies an abnormality detection condition to determine whether an abnormality occurs in the plurality of network devices. If the difference data is determined to satisfy the abnormality detection condition, it is determined that at least one network device may be abnormal.

For example, it may determine whether the plurality of network devices is abnormal by directly determining whether the difference data itself satisfies a preset condition, which may include determine whether an abnormality occurs in the plurality of network devices by determining whether the attribute information and/or the consumption information in the difference data satisfy the preset condition.

In an optional implementation manner, it may be determined whether the plurality of network devices is abnormal by determining whether a value corresponding to the consumption information is within a preset range. If the value is not in the preset range, it may be determined that the plurality of network devices is abnormal.

In an optional implementation manner, it may be determined whether the plurality of network devices is abnormal by determining whether the attribute information is included in a preset list. If the device attribute information is included in the preset list, it may be determined that the plurality of network devices is abnormal.

Obviously, it may consider above-mentioned two situations to determine whether the plurality of network devices is abnormal.

As another optional solution, the ledger data may include the attribute information and consumption information of the network devices. Then, step 104 may include following exemplary steps.

At step 104a, whether own ledger data includes multiple same attribute information may be determined.

At step 104b, if own ledger data is determined to include multiple same attribute information, it may be determined whether the plurality of network devices is abnormal according to the consumption information corresponding to multiple same attribute information.

For example, when same attribute information corresponds to multiple different consumption information, it may be determined whether the plurality of network devices is abnormal according to the magnitude relationship between multiple different consumption information. If the difference between different consumption information is greater than a preset value, it may be determined that an abnormality occurs in the plurality of network devices, and it may be determined whether there is an abnormal device in the device networking system.

Furthermore, if the difference data includes device identification information representing data source, embodiments of the present disclosure may further locate the abnormal device in the device networking system.

In embodiments of the present disclosure, a master node may be arbitrated from all network devices in the device networking system by using a preset arbitration rule.

As an optional solution, the arbitration method may include that the second network device may be connected to the device networking system and send a multicast message to the plurality of network devices, where the multicast message may include a joining message; and all network devices in the device networking system may arbitrate a master node from all network devices according to the preset arbitration rule, where all network devices may include the second network device and plurality of network devices that have received the joining message.

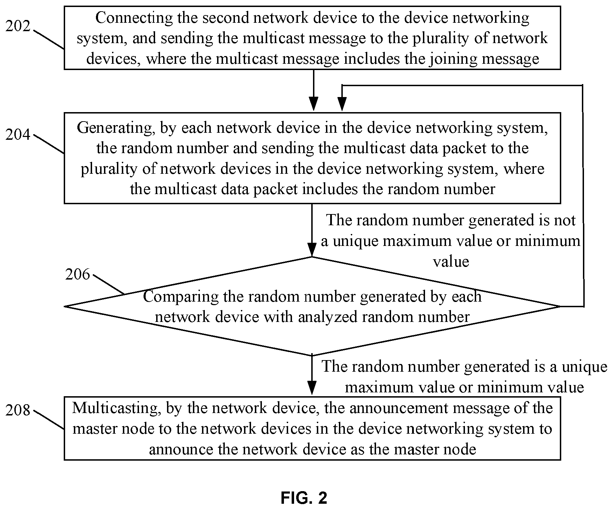

FIG. 2 illustrates a flowchart of an arbitration method for a master node provided by exemplary embodiments of the present disclosure. As shown in FIG. 2, the arbitration method may include following exemplary steps.

At step 202, the second network device may be connected to the device networking system and send the multicast message to the plurality of network devices, where the multicast message may include the joining message.

For example, after the second network device is connected to the local area network, the second network device may be connected to the device networking system. Next, the second network device may send the multicast message to the plurality of network devices in the device networking system. For example, the joining message in the multicast message may include a device serial number, an IP address or MAC address.

At step 204, each network device in the device networking system may generate a random number and send a multicast data packet to the plurality of network devices in the device networking system, where the multicast data packet may include the random number.

For example, the random number may range from 1 to 100.

As shown in FIG. 2, all network devices in the device networking system may execute steps 204 to 208, where all network devices may include the second network device and the plurality of network devices that have received the joining message.

At step 206, each network device may compare the random number generated by itself with the random number analyzed from received multicast data packet. If any network device determine that the random number generated by itself is a unique maximum value or a unique minimum value after above comparison, step 208 may be executed; and if each network device does not determine a unique maximum value or a unique minimum value after above comparison, step 204 may be executed.

After sending the random number, each network device may wait for a set time period to receive random numbers sent by other network devices within the set time period, which may ensure that the random numbers sent by all other network devices may be received.

For example, the set time period may be 3s.

Next, each network device may analyze the random number from the received multicast data packet, and compare the random number generated by itself with the analyzed random number. If any network device determines own random number to be the unique maximum value or the unique minimum value after comparison, it may indicate that the network device may have the condition to declare itself as the master node, and step 208 may be executed. If any network device does not determine own random number to be the unique maximum value or the unique minimum value after comparison, it may indicate that the master node cannot be determined, and step 204 may continue to be executed to make each network device regenerate the random number.

At step 208, the network device may multicast an announcement message of the master node to the network devices in the device networking system to announce such network device as the master node.

As another optional solution, the arbitration method may include that the second network device may be connected to the device networking system and send the multicast message to the plurality of network devices, where the multicast message may include the joining message; in response to the joining message, the original master node may send a re-arbitration message to other network devices than the original master node in the device networking system; all network devices in the device networking system may arbitrate a master node from all network devices according to the preset arbitration rule; and all network devices may include the original master node and the plurality of network devices that have received the re-arbitration message, or all network devices may include the plurality of network devices other than the original master node that have received the re-arbitration message.

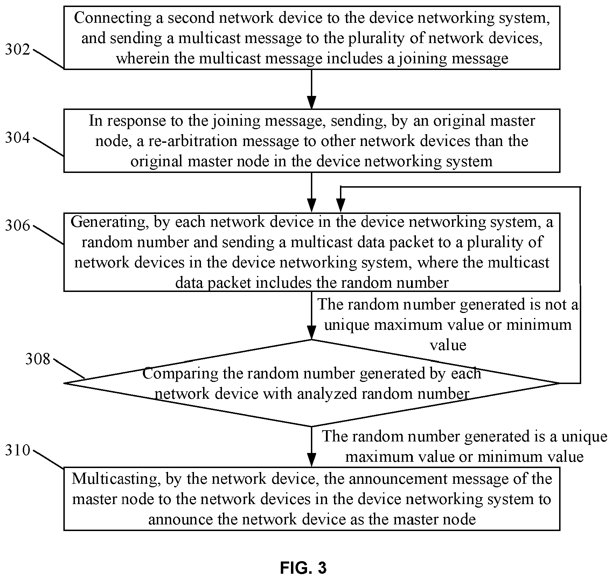

For example, FIG. 3 illustrates a flowchart of another arbitration method for a master node provided by exemplary embodiments of the present disclosure. As shown in FIG. 3, the arbitration method may include following exemplary steps.

At step 302, the second network device may be connected to the device networking system and send the multicast message to the plurality of network devices, where the multicast message may include the joining message.

For example, after the second network device is connected to the local area network, the second network device may be connected to the device networking system. Then, the second network device may send the multicast message to the plurality of network devices in the device networking system. For example, the joining message in the multicast message may include a device serial number, an IP address or MAC address.

At step 304, in response to the joining message, the original master node may send the re-arbitration message to other network devices than the original master node in the device networking system.

The original master node may multicast the re-arbitration message to the network devices in the device networking system to request the master node to be re-arbitrated.

At step 306, each network device in the device networking system may generate a random number and send thee multicast data packet to the plurality of network devices in the device networking system, where the multicast data packet may include the random number.

For example, the random number may range from 1 to 100.

As shown in FIG. 3, all network devices in the device networking system may execute steps 306 to 310, where all network devices may include the original master node and the plurality of network devices that have received the re-arbitration message, or all network devices may include the plurality of network devices other than the original master node that have received the re-arbitration message.

At step 308, each network device may compare the random number generated by itself with the random number analyzed from the received multicast data packet. If any network device determines that the random number generated by itself is a unique maximum value or the unique minimum value after comparison, step 310 may be executed. If each network device does not determine a unique maximum value or a unique minimum value after comparison, step 306 may be executed.

After sending the random number, each network device may wait for a set time period to receive random numbers sent by other network devices within the set time period, which may ensure that random numbers sent by all other network devices may be received. For example, the set time period may be 3s.

Next, each network device may analyze the random number from the received multicast data packet and compare the random number generated by itself with the analyzed random number. If any network device determines own random number to be the unique maximum value or the unique minimum value after comparison, it may indicate that the network device may have the condition to declare itself as the master node, and step 310 may be executed. If any network device does not determine own random number to be the unique maximum value or the unique minimum value after comparison, it may indicate that the master node cannot be determined, and step 306 may be executed to make each network device regenerate the random number.

At step 310, the network device may multicast the announcement message of the master node to the network device in the device networking system to announce such network device as the master node.

It should be noted that in the process of master node arbitration, the characteristic value of the network device connected to the local area network may be synchronized to other network devices in the local area network. For example, the characteristic value may include the device serial number, IP address or MAC address. At this point, if an external network device (i.e., a network device not in the local area network) needs to be connected to the local area network and requests to obtain corresponding resources of the network device in the local area network, the network device in the local area network may not respond.

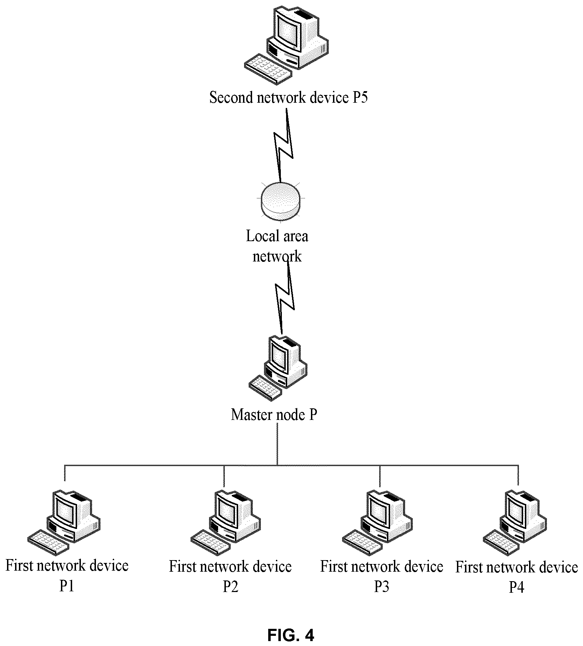

The device abnormality detection method provided by embodiments of the present disclosure is described in detail below with reference to FIG. 4 through one embodiment. FIG. 4 illustrates a structural schematic of a device networking system provided by exemplary embodiments of the present disclosure. As shown in FIG. 4, the device networking system may include a plurality of network devices. The plurality of network devices may include a master node P, a second network device P5, and a plurality of first network devices, where the plurality of first network devices may include a first network device P1, a first network device P2, a first network device P3, and a first network device P4. The master node P, the first network device P1, the first network device P2, the first network device P3, and the first network device P4 may be in the local area network. At this point, the second network device P5, which is a new member, needs to be connected to the local area network. The device abnormality detection method may include following exemplary steps.

At step 402, the second network device P5 may be connected to the device networking system, and all network devices in the device networking system may arbitrate a master node P from all network devices according to the preset arbitration rule.

The arbitration process of the master node P may refer to the arbitration method of the master node shown in FIG. 2 or FIG. 3, which may not be described in detail herein.

At step 404, the master node P may send the ledger data of the master node P to the second network device P5.

**Table 5**

| Number | Attribute information | Consumption information |
|---|---|---|
| 1 | 80 port (P) | Port status information |
| 2 | 443 port (P1) | Port status information |
| 3 | 11 port (P2) | Port status information |
| 4 | 456 port (P3) | Port status information |
| 5 | 344 port (P4) | Port status information |

Table 5 shows current ledger data of each network device before the second network device P5 is connected to the device networking system, that is, before connected to the local area network. Table 5 takes network port management and control as an example. Port status information may be open or closed. Or the port status information may be an open time period. For example, the port may only open at a set time period, such as open at the set time period of 8:00-9:00. Or the port status information may be port open time. For example, the port status information may be port open remaining time. For example, the port may be temporarily opened for 1 hour.

As shown in Table 5 above, current ledger data may include port 80 and port status information of the master node P, port 443 and port status information of the first network device P1, port 11 and port status information of the first network device P2, port 456 and port state information of the first network device P3, and port 344 and port state information of the first network device P4.

At step 406, the second network device P5 may update own current ledger data according to the ledger data of the master node P, compare the ledger data of the master node P and the ledger data of the second network device P5 to obtain difference data, and send the difference data to the master node P.

In one embodiment, since the second network device P5 is a network device newly added to the device networking system, the second network device P5 may compare updated own ledger data with the ledger data of the master node P to obtain the difference data, thereby determining the change in own ledger data.

**Table 6**

| Number | Attribute information | Consumption information |
|---|---|---|
| 1 | 80 port (P) | Port status information 1 |
| 2 | 443 port (P1) | Port status information |
| 3 | 11 port (P2) | Port status information |
| 4 | 456 port (P3) | Port status information |
| 5 | 344 port (P4) | Port status information |
| 6 | 80 port (P5) | Port status information 2 |

Table 6 shows the ledger data after the change of each network device after the second network device P5 is connected to the device networking system, that is, after connected to the local area network. As shown in Table 6 above, the ledger data after the change may include port 80 and port status information 1 of the master node P, port 443 and port status information of the first network device P1, port 11 and port status information of the first network device P2, port 456 and port state information of the first network device P3, port 344 and port state information of the first network device P4, and port 80 and port state information 2 of the second network device P5. The difference data may be port state information corresponding to the port 80. For example, the difference data may include the port state information 1 of the master node P and the port state information 2 of the second network device P5.

If the ledger data of the original first network device in the device networking system changes, the difference data may be directly sent to the master node P, and the ledger data after the change may be synchronized through the master node P.

At step 408, the master node P may update own current ledger data to the ledger data after the change according to the difference data and send the difference data to the first network device P1, the first network device P2, the first network device P3, and the first network device P4.

At step 410, the first network device P1, the first network device P2, the first network device P3, and the first network device P4 may update own current ledger data to the data after the change according to the difference data.

At step 412, any network device in the device networking system may determine whether the plurality of network devices is abnormal according to the difference data.

As shown in Table 6 above, any network device in the device networking system may determine that the ledger data may include two identical ports 80; according to the port status information 1 and the port status information 2 corresponding to the ports 80, it may be determined whether the master node P and the second network device P5 are abnormal. For example, if the difference between the port state information 1 and the port state information 2 is greater than a preset difference, it may be determined that an abnormality occurs between the second network device P5 and the master node P. For example, the port status information may be port open remaining time, the difference may be a difference value, the preset difference may be a preset difference value. Therefore, the difference between the port open remaining time 1 and the port open remaining time 2 may be greater than the preset difference, and it may be determined that an abnormality occurs between the second network device P5 and the master node P.

Embodiments of the present disclosure also take remaining online time of the Internet cafe account as an example for description. The account may be logged in on any network device (i.e., a host), and the Internet may be connected to the account. During the online process, the ledger data (remaining online time) may change, and the ledger data may be synchronized between the hosts.

**Table 7**

| Number | Attribute information | Consumption information |
|---|---|---|
| 1 | Account name 1 | Remaining online time 1 |
| 2 | Account name 2 | Remaining online time 2 |

As shown in Table 7, the ledger data after the change of each network device may include an account name 1 and corresponding remaining online time 1 and include an account name 2 and corresponding remaining online time 2. For example, the difference data may be the change data of the remaining online time 1 corresponding to the account name 1; for another example, the difference data may be the change data of the remaining online time 2 corresponding to the account name 2.

Because during normal online connection, no matter which host the user logs into the Internet through the account name, the remaining online time corresponding to same account name gradually decreases, so that abnormal detection condition may be set to be increase or sudden change of the remaining online time. For example, when any network device in the device networking system determines that the change data of the remaining online time 1 is increase data or sudden change data and determines that the difference data satisfies the abnormality detection condition, it may be determined that the network device logged in with account name 1 is abnormal.

In the technical solution provided by embodiments of the present disclosure, if the ledger data of the specific network device in the plurality of network devices changes, the specific network device may synchronize the ledger data after the change or difference data to other network devices than the specific network device in the device networking system. Any network device in the device networking system may determine whether the plurality of network devices is abnormal according to the difference data. In embodiments of the present disclosure, the device abnormality detection function may be randomly allocated to any network device, and the device abnormality detection may be realized without a server, thereby avoiding the problem of security control failure caused by the security control performed by the server in the existing technology, thereby improving network security.

In embodiments of the present disclosure, each network device may have an equal status, and each network device may be determined as the master node through arbitration to obtain security control right in the device networking system. Due to the randomness of determining the master node, it is difficult for network attackers to lock the master node and implement attack behaviors, such that it may make the master node less vulnerable to attacks, thereby improving security.

In embodiments of the present disclosure, when attackers randomly attack a network device and tamper with the security policy, the change of the security policy may trigger the synchronization operation between the network devices. During the synchronization process, the master node may properly analyze the security policy to detect anomality, locate the attacked network device and restore the security policy, thereby achieving the purpose of enhancing security.

The device abnormality detection method in embodiments of the present disclosure may be implemented without increasing hardware cost.

In embodiments of the present disclosure, in a same local area network environment, the ledger data may be synchronized in real time without going through an external network or server.

The above may merely be embodiments of the present disclosure. Changes or substitutions which can be easily thought by those skilled in the art within the technical scope disclosed by the present disclosure should be covered by the protection scope of the present disclosure. The protection scope of the present disclosure shall be subject to the protection scope of the claims.

## Claims

1. A device abnormality detection method, wherein the method is applied to a device networking system including a plurality of network devices having respective ledger data including consumption information and attribute information of the respective network device, the method comprising:
determining, by a specific network device, if the ledger data of the specific network device in the device network system has changed;
if the ledger data of the specific network device has changed, synchronizing, by the specific network device, difference data to other network devices than the specific network device in the device networking system, wherein the difference data is changed data in the ledger data; and
determining, by any network device, whether there is an abnormal network device in the plurality of network devices is performed according to the difference data; **characterized in that**
the attribute information are fixed data, and the consumption information are variable data during use of the respective network device, wherein the consumption information is configured to record information of consumption during use of the respective network device; and
determining whether there is an abnormal network device includes determining whether a value corresponding to the consumption information is within a preset range and by determining whether the attribute information is included in a preset list, and if the value is not in the preset range or the attribute information is included in the preset list, it is determined that the plurality of network devices is abnormal.

2. The method according to claim 1, wherein:
the plurality of network devices includes a master node and at least one first network device;
the specific network device is any first network device, and the other network devices include the master node and other first network devices; and
synchronizing, by the specific network device, the difference data to the other network devices than the specific network device in the device networking system includes:
sending, by the specific network device, the difference data to the master node; and updating, by the master node, current ledger data of the master node to the ledger data after the change according to the difference data; and sending, by the master node, the difference data or the ledger data after the change to the other first network devices; or
sending, by the specific network device, the ledger data after the change to the master node; updating, by the master node, current ledger data of the master node to the ledger data after the change; determining, by the master node, the difference data according to the current ledger data of the master node and the ledger data after the change; and sending, by the master node, the difference data or the ledger data after the change to the other first network devices; or
sending, by the specific network device, the difference data or the ledger data after the change to the master node and the other first network devices.

3. The method according to claim 2, further including:
connecting a second network device to the device networking system, and sending a multicast message to the plurality of network devices, wherein the multicast message includes a joining message; and
performing an arbitration process to determine one master node, by all network devices in the device networking system, from all network devices according to a preset arbitration rule, wherein all network devices include the second network device and a plurality of network devices receiving the joining message.

4. The method according to claim 2, further including:
connecting a second network device to the device networking system, and sending a multicast message to the plurality of network devices, wherein the multicast message includes a joining message;
in response to the joining message, sending, by an original master node, a re-arbitration message to other network devices than the original master node in the device networking system; and
performing an arbitration process to determine a master node, by all network devices in the device networking system, from all network devices according to a preset arbitration rule, wherein all network devices include the original master node and a plurality of network devices receiving the re-arbitration message, or all network devices include a plurality of network devices receiving the re-arbitration message other than the original master node.

5. The method according to claim 1, wherein:
determining whether the specific network device is abnormal according to the difference data includes:
determining whether the ledger data of the specific network device includes multiple same attribute information; and
if the ledger data of the specific network device is determined to include the multiple same attribute information, determining whether the plurality of network devices is abnormal according to consumption information corresponding to the multiple same attribute information.

6. A device networking system including a plurality of network devices having respective ledger data including consumption information and attribute information of the respective network device, comprising:
a specific network device, which is configured to determine if the ledger data of the specific network device has changed, and, if the ledger data has changed, synchronize, by the specific network device, the difference data to other network devices than the specific network device in the device networking system, wherein the difference data is changed data in the ledger data, wherein
the specific network device is configured to determine whether there is an abnormal network device in the plurality of network devices according to the difference data; **characterized in that**
the attribute information are fixed data, and the consumption information are variable data during use of the respective network device, wherein the consumption information is configured to record information of consumption during use of the respective network device; and
the specific network device is configured to determine whether there is an abnormal network device including to determine whether a value corresponding to the consumption information is within a preset range and by determining whether the attribute information is included in a preset list, and if the value is not in the preset range or the attribute information is included in the preset list, it is determined that the plurality of network devices is abnormal.

7. The system according to claim 6, wherein:
the plurality of network devices includes a master node and at least one first network device; the specific network device is any first network device; and the other network devices include the master node and other first network devices; and
the specific network device is configured to send the difference data to the master node; and the master node is configured to update current ledger data of the master node to the ledger data after the change according to the difference data and send the difference data after the change to the other first network devices; or
the specific network device is configured to send the ledger data after the change to the master node; the master node is configured to update current ledger data of the master node to the ledger data after the change, determine the difference data according to the current ledger data of the master node and the ledger data after the change, and send the difference data or the ledger data after the change to the other first network devices; or
the specific network device is configured to send the difference data or the ledger data after the change to the master node and the other first network devices.

8. The system according to claim 7, further including:
a second network device, which is configured to be connected to the device networking system, and send a multicast message to the plurality of network devices, wherein:
the multicast message includes a joining message; and
all network devices in the device networking system are configured to perform an arbitration process to determine one master node according to a preset arbitration rule;
and all network devices include the second network device and a plurality of network devices receiving the joining message.

9. The system according to claim 7, further including:
a second network device, which is configured to be connected to the device networking system and send a multicast message to the plurality of network devices, wherein the multicast message includes a joining message; and
an original master node, which is configured to, in response to the joining message, send a re-arbitration message to other network devices than the original master node in the device networking system, wherein:
all network devices in the device networking system are configured to perform an arbitration process to determine a master node according to a preset arbitration rule, wherein all network devices include the original master node and a plurality of network devices receiving the re-arbitration message, or all network devices include a plurality of network devices receiving the re-arbitration message other than the original master node.

10. The system according to claim 6, wherein:
the specific network device is configured to determine whether ledger data of the specific network device includes multiple same attribute information; and if the ledger data of the specific network device is determined to include the multiple same attribute information, determine whether the plurality of network devices is abnormal according to consumption information corresponding to the multiple same attribute information.

## Patentansprüche

1. Ein Verfahren zur Erkennung von Geräteanomalien, wobei das Verfahren auf ein Gerätnetzwerksystem angewendet wird, das eine Vielzahl von Netzwerkgeräten umfasst, die jeweils Ledger-Daten enthalten, darunter Verbrauchsinformationen und Attributinformationen des jeweiligen Netzwerkgeräts, wobei das Verfahren umfasst:
Bestimmen, durch ein spezifisches Netzwerkgerät, ob sich die Ledger-Daten des spezifischen Netzwerkgeräts im Gerätnetzwerksystem geändert haben;
falls sich die Ledger-Daten des spezifischen Netzwerkgeräts geändert haben, Synchronisieren, durch das spezifische Netzwerkgerät, von Differenzdaten mit anderen Netzwerkgeräten als dem spezifischen Netzwerkgerät im Gerätnetzwerksystem, wobei die Differenzdaten geänderte Daten in den Ledger-Daten sind; und
Bestimmen, durch ein beliebiges Netzwerkgerät, ob ein anomales Netzwerkgerät in der Vielzahl von Netzwerkgeräten vorliegt, basierend auf den Differenzdaten;
**dadurch gekennzeichnet, dass**
die Attributinformationen feste Daten sind und die Verbrauchsinformationen während der Nutzung des jeweiligen Netzwerkgeräts variable Daten sind, wobei die Verbrauchsinformationen dazu konfiguriert sind, Verbrauchsinformationen während der Nutzung des jeweiligen Netzwerkgeräts zu speichern; und
Bestimmen, ob ein anomales Netzwerkgerät vorliegt, umfasst das Bestimmen, ob ein Wert, der den Verbrauchsinformationen entspricht, innerhalb eines voreingestellten Bereichs liegt, und Bestimmen, ob die Attributinformationen in einer voreingestellten Liste enthalten sind; falls der Wert nicht im voreingestellten Bereich liegt oder die Attributinformationen in der voreingestellten Liste enthalten sind, wird bestimmt, dass die Vielzahl von Netzwerkgeräten anormal ist.

2. Das Verfahren nach Anspruch 1, wobei:
die Vielzahl von Netzwerkgeräten einen Hauptknoten und mindestens ein erstes Netzwerkgerät umfasst;
das spezifische Netzwerkgerät ein beliebiges erstes Netzwerkgerät ist, und die anderen Netzwerkgeräte den Hauptknoten und andere erste Netzwerkgeräte umfassen; und
das Synchronisieren, durch das spezifische Netzwerkgerät, der Differenzdaten mit den anderen Netzwerkgeräten als dem spezifischen Netzwerkgerät im Gerätnetzwerksystem umfasst:
Senden, durch das spezifische Netzwerkgerät, der Differenzdaten an den Hauptknoten; und Aktualisieren, durch den Hauptknoten, der aktuellen Ledger-Daten des Hauptknotens zu den Ledger-Daten nach der Änderung entsprechend den Differenzdaten; und Senden, durch den Hauptknoten, der Differenzdaten oder der Ledger-Daten nach der Änderung an die anderen ersten Netzwerkgeräte; oder
Senden, durch das spezifische Netzwerkgerät, der Ledger-Daten nach der Änderung an den Hauptknoten; Aktualisieren, durch den Hauptknoten, der aktuellen Ledger-Daten des Hauptknotens zu den Ledger-Daten nach der Änderung; Bestimmen, durch den Hauptknoten, der Differenzdaten entsprechend den aktuellen Ledger-Daten des Hauptknotens und den Ledger-Daten nach der Änderung; und Senden, durch den Hauptknoten, der Differenzdaten oder der Ledger-Daten nach der Änderung an die anderen ersten Netzwerkgeräte; oder
Senden, durch das spezifische Netzwerkgerät, der Differenzdaten oder der Ledger-Daten nach der Änderung an den Hauptknoten und die anderen ersten Netzwerkgeräte.

3. Das Verfahren nach Anspruch 2, ferner umfassend:
Verbinden eines zweiten Netzwerkgeräts mit dem Gerätnetzwerksystem und Senden einer Multicast-Nachricht an die Vielzahl von Netzwerkgeräten, wobei die Multicast-Nachricht eine Beitrittsnachricht enthält; und
Durchführen eines Schiedsverfahrens durch alle Netzwerkgeräte im Gerätnetzwerksystem, um einen Hauptknoten gemäß einer voreingestellten Schiedsregel zu bestimmen, wobei alle Netzwerkgeräte das zweite Netzwerkgerät und eine Vielzahl von Netzwerkgeräten umfassen, die die Beitrittsnachricht empfangen haben.

4. Das Verfahren nach Anspruch 2, ferner umfassend:
Verbinden eines zweiten Netzwerkgeräts mit dem Gerätnetzwerksystem und Senden einer Multicast-Nachricht an die Vielzahl von Netzwerkgeräten, wobei die Multicast-Nachricht eine Beitrittsnachricht enthält;
als Antwort auf die Beitrittsnachricht, Senden, durch einen ursprünglichen Hauptknoten, einer Neuschieds-Nachricht an andere Netzwerkgeräte als den ursprünglichen Hauptknoten im Gerätnetzwerksystem; und
Durchführen eines Schiedsverfahrens durch alle Netzwerkgeräte im Gerätnetzwerksystem, um einen Hauptknoten gemäß einer voreingestellten Schiedsregel zu bestimmen, wobei alle Netzwerkgeräte den ursprünglichen Hauptknoten und eine Vielzahl von Netzwerkgeräten umfassen, die die Neuschieds-Nachricht empfangen haben, oder alle Netzwerkgeräte eine Vielzahl von Netzwerkgeräten umfassen, die die Neuschieds-Nachricht außer dem ursprünglichen Hauptknoten empfangen haben.

5. Das Verfahren nach Anspruch 1, wobei:
Bestimmen, ob das spezifische Netzwerkgerät anormal ist, gemäß den Differenzdaten umfasst:
Bestimmen, ob die Ledger-Daten des spezifischen Netzwerkgeräts mehrere gleiche Attributinformationen enthalten; und
falls festgestellt wird, dass die Ledger-Daten des spezifischen Netzwerkgeräts mehrere gleiche Attributinformationen enthalten, Bestimmen, ob die Vielzahl von Netzwerkgeräten gemäß den Verbrauchsinformationen, die den mehrfach gleichen Attributinformationen entsprechen, anormal ist.

6. Ein Gerätnetzwerksystem, das eine Vielzahl von Netzwerkgeräten umfasst, die jeweils Ledger-Daten mit Verbrauchsinformationen und Attributinformationen des jeweiligen Netzwerkgeräts aufweisen, umfassend:
ein spezifisches Netzwerkgerät, das dazu konfiguriert ist, zu bestimmen, ob sich die Ledger-Daten des spezifischen Netzwerkgeräts geändert haben, und, falls sich die Ledger-Daten geändert haben, die Differenzdaten mit anderen Netzwerkgeräten als dem spezifischen Netzwerkgerät im Gerätnetzwerksystem zu synchronisieren, wobei die Differenzdaten geänderte Daten in den Ledger-Daten sind, wobei das spezifische Netzwerkgerät dazu konfiguriert ist, zu bestimmen, ob ein anomales Netzwerkgerät in der Vielzahl von Netzwerkgeräten vorliegt, basierend auf den Differenzdaten;
**dadurch gekennzeichnet, dass** die Attributinformationen feste Daten sind und die Verbrauchsinformationen variable Daten während der Nutzung des jeweiligen Netzwerkgeräts sind, wobei die Verbrauchsinformationen dazu konfiguriert sind, Informationen über den Verbrauch während der Nutzung des jeweiligen Netzwerkgeräts zu speichern, und das spezifische Netzwerkgerät dazu konfiguriert ist, zu bestimmen, ob ein anomales Netzwerkgerät vorliegt, einschließlich des Bestimmens, ob ein Wert, der den Verbrauchsinformationen entspricht, innerhalb eines voreingestellten Bereichs liegt und des Bestimmens, ob die Attributinformationen in einer voreingestellten Liste enthalten sind, und falls der Wert nicht im voreingestellten Bereich liegt oder die Attributinformationen in der voreingestellten Liste enthalten sind, wird bestimmt, dass die Vielzahl von Netzwerkgeräten anormal ist.

7. Das System nach Anspruch 6, wobei:
die Vielzahl von Netzwerkgeräten einen Hauptknoten und mindestens ein erstes Netzwerkgerät umfasst;
das spezifische Netzwerkgerät ein beliebiges erstes Netzwerkgerät ist, und die anderen Netzwerkgeräte den Hauptknoten und andere erste Netzwerkgeräte umfassen; und
das spezifische Netzwerkgerät dazu konfiguriert ist, die Differenzdaten an den Hauptknoten zu senden, und der Hauptknoten dazu konfiguriert ist, die aktuellen Ledger-Daten des Hauptknotens zu den Ledger-Daten nach der Änderung gemäß den Differenzdaten zu aktualisieren und die Differenzdaten nach der Änderung an die anderen ersten Netzwerkgeräte zu senden; oder
das spezifische Netzwerkgerät dazu konfiguriert ist, die Ledger-Daten nach der Änderung an den Hauptknoten zu senden, der Hauptknoten dazu konfiguriert ist, die aktuellen Ledger-Daten des Hauptknotens zu den Ledger-Daten nach der Änderung zu aktualisieren, die Differenzdaten gemäß den aktuellen Ledger-Daten des Hauptknotens und den Ledger-Daten nach der Änderung zu bestimmen und die Differenzdaten oder die Ledger-Daten nach der Änderung an die anderen ersten Netzwerkgeräte zu senden; oder
das spezifische Netzwerkgerät dazu konfiguriert ist, die Differenzdaten oder die Ledger-Daten nach der Änderung an den Hauptknoten und die anderen ersten Netzwerkgeräte zu senden.

8. Das System nach Anspruch 7, ferner umfassend:
ein zweites Netzwerkgerät, das dazu konfiguriert ist, mit dem Gerätnetzwerksystem verbunden zu werden und eine Multicast-Nachricht an die Vielzahl von Netzwerkgeräten zu senden, wobei:
die Multicast-Nachricht eine Beitrittsnachricht enthält, und
alle Netzwerkgeräte im Gerätnetzwerksystem dazu konfiguriert sind, ein Schiedsverfahren durchzuführen, um einen Hauptknoten gemäß einer voreingestellten Schiedsregel zu bestimmen, wobei alle Netzwerkgeräte das zweite Netzwerkgerät und eine Vielzahl von Netzwerkgeräten umfassen, die die Beitrittsnachricht empfangen haben.

9. Das System nach Anspruch 7, ferner umfassend:
ein zweites Netzwerkgerät, das dazu konfiguriert ist, mit dem Gerätnetzwerksystem verbunden zu werden und eine Multicast-Nachricht an die Vielzahl von Netzwerkgeräten zu senden, wobei die Multicast-Nachricht eine Beitrittsnachricht enthält, und
ein ursprünglicher Hauptknoten, der dazu konfiguriert ist, als Antwort auf die Beitrittsnachricht eine Neuschieds-Nachricht an andere Netzwerkgeräte als den ursprünglichen Hauptknoten im Gerätnetzwerksystem zu senden, wobei:
alle Netzwerkgeräte im Gerätnetzwerksystem dazu konfiguriert sind, ein Schiedsverfahren durchzuführen, um einen Hauptknoten gemäß einer voreingestellten Schiedsregel zu bestimmen, wobei alle Netzwerkgeräte den ursprünglichen Hauptknoten und eine Vielzahl von Netzwerkgeräten umfassen, die die Neuschieds-Nachricht empfangen haben, oder alle Netzwerkgeräte eine Vielzahl von Netzwerkgeräten umfassen, die die Neuschieds-Nachricht außer dem ursprünglichen Hauptknoten empfangen haben.

10. Das System nach Anspruch 6, wobei:
das spezifische Netzwerkgerät dazu konfiguriert ist, zu bestimmen, ob die Ledger-Daten des spezifischen Netzwerkgeräts mehrere gleiche Attributinformationen enthalten, und falls festgestellt wird, dass die Ledger-Daten des spezifischen Netzwerkgeräts mehrere gleiche Attributinformationen enthalten, zu bestimmen, ob die Vielzahl von Netzwerkgeräten gemäß den Verbrauchsinformationen, die den mehrfach gleichen Attributinformationen entsprechen, anormal ist.

## Revendications

1. Un procédé de détection d'anomalie d'un dispositif, le procédé étant appliqué à un système de mise en réseau de dispositifs comprenant une pluralité de dispositifs réseau ayant respectivement des données de registre comprenant des informations de consommation et des informations d'attribut du dispositif réseau respectif, le procédé comprenant :
déterminer, par un dispositif réseau spécifique, si les données de registre du dispositif réseau spécifique dans le système de mise en réseau de dispositifs ont changé ;
si les données de registre du dispositif réseau spécifique ont changé, synchroniser, par le dispositif réseau spécifique, les données de différence avec les autres dispositifs réseau que le dispositif réseau spécifique dans le système de mise en réseau de dispositifs, les données de différence étant des données modifiées dans les données de registre ; et
déterminer, par tout dispositif réseau, s'il existe un dispositif réseau anormal parmi la pluralité de dispositifs réseau en fonction des données de différence ;
**caractérisé en ce que**
les informations d'attribut sont des données fixes, et les informations de consommation sont des données variables pendant l'utilisation du dispositif réseau respectif, les informations de consommation étant configurées pour enregistrer des informations de consommation pendant l'utilisation du dispositif réseau respectif ; et
déterminer s'il existe un dispositif réseau anormal comprend déterminer si une valeur correspondant aux informations de consommation se trouve dans une plage prédéfinie et déterminer si les informations d'attribut sont incluses dans une liste prédéfinie, et si la valeur n'est pas dans la plage prédéfinie ou si les informations d'attribut sont incluses dans la liste prédéfinie, il est déterminé que la pluralité de dispositifs réseau est anormale.

2. Le procédé selon la revendication 1, dans lequel :
la pluralité de dispositifs réseau comprend un nœud principal et au moins un premier dispositif réseau ;
le dispositif réseau spécifique est un quelconque premier dispositif réseau, et les autres dispositifs réseau comprennent le nœud principal et d'autres premiers dispositifs réseau ; et
synchroniser, par le dispositif réseau spécifique, les données de différence avec les autres dispositifs réseau que le dispositif réseau spécifique dans le système de mise en réseau de dispositifs comprend :
envoyer, par le dispositif réseau spécifique, les données de différence au nœud principal ; et mettre à jour, par le nœud principal, les données de registre actuelles du nœud principal en les remplaçant par les données de registre après modification selon les données de différence ; et envoyer, par le nœud principal, les données de différence ou les données de registre après modification aux autres premiers dispositifs réseau ; ou
envoyer, par le dispositif réseau spécifique, les données de registre après modification au nœud principal ; mettre à jour, par le nœud principal, les données de registre actuelles du nœud principal en les remplaçant par les données de registre après modification ; déterminer, par le nœud principal, les données de différence en fonction des données de registre actuelles du nœud principal et des données de registre après modification ; et envoyer, par le nœud principal, les données de différence ou les données de registre après modification aux autres premiers dispositifs réseau ; ou
envoyer, par le dispositif réseau spécifique, les données de différence ou les données de registre après modification au nœud principal et aux autres premiers dispositifs réseau.

3. Le procédé selon la revendication 2, comprenant en outre :
connecter un deuxième dispositif réseau au système de mise en réseau de dispositifs et envoyer un message de multidiffusion à la pluralité de dispositifs réseau, le message de multidiffusion comprenant un message d'adhésion ; et
effectuer un processus d'arbitrage pour déterminer un nœud principal, par tous les dispositifs réseau dans le système de mise en réseau de dispositifs, parmi tous les dispositifs réseau selon une règle d'arbitrage prédéfinie, tous les dispositifs réseau comprenant le deuxième dispositif réseau et une pluralité de dispositifs réseau recevant le message d'adhésion.

4. Le procédé selon la revendication 2, comprenant en outre :
connecter un deuxième dispositif réseau au système de mise en réseau de dispositifs et envoyer un message de multidiffusion à la pluralité de dispositifs réseau, le message de multidiffusion comprenant un message d'adhésion ;
en réponse au message d'adhésion, envoyer, par un nœud principal original, un message de réarbitrage aux autres dispositifs réseau que le nœud principal original dans le système de mise en réseau de dispositifs ; et
effectuer un processus d'arbitrage pour déterminer un nœud principal, par tous les dispositifs réseau dans le système de mise en réseau de dispositifs, parmi tous les dispositifs réseau selon une règle d'arbitrage prédéfinie, tous les dispositifs réseau comprenant le nœud principal original et une pluralité de dispositifs réseau recevant le message de réarbitrage, ou tous les dispositifs réseau comprenant une pluralité de dispositifs réseau recevant le message de réarbitrage à l'exception du nœud principal original.

5. Le procédé selon la revendication 1, dans lequel :
déterminer si le dispositif réseau spécifique est anormal selon les données de différence comprend :
déterminer si les données de registre du dispositif réseau spécifique comprennent plusieurs mêmes informations d'attribut ; et
si les données de registre du dispositif réseau spécifique comprennent plusieurs mêmes informations d'attribut, déterminer si la pluralité de dispositifs réseau est anormale selon les informations de consommation correspondant aux mêmes informations d'attribut.

6. Un système de mise en réseau de dispositifs comprenant une pluralité de dispositifs réseau ayant respectivement des données de registre comprenant des informations de consommation et des informations d'attribut du dispositif réseau respectif, comprenant :
un dispositif réseau spécifique, qui est configuré pour déterminer si les données de registre du dispositif réseau spécifique ont changé et, si les données de registre ont changé, synchroniser, par le dispositif réseau spécifique, les données de différence avec les autres dispositifs réseau que le dispositif réseau spécifique dans le système de mise en réseau de dispositifs, les données de différence étant des données modifiées dans les données de registre, dans lequel le dispositif réseau spécifique est configuré pour déterminer s'il existe un dispositif réseau anormal parmi la pluralité de dispositifs réseau en fonction des données de différence ;
**caractérisé en ce que** les informations d'attribut sont des données fixes, et les informations de consommation sont des données variables pendant l'utilisation du dispositif réseau respectif, les informations de consommation étant configurées pour enregistrer des informations de consommation pendant l'utilisation du dispositif réseau respectif ; et
le dispositif réseau spécifique est configuré pour déterminer s'il existe un dispositif réseau anormal comprenant déterminer si une valeur correspondant aux informations de consommation se trouve dans une plage prédéfinie et déterminer si les informations d'attribut sont incluses dans une liste prédéfinie, et si la valeur n'est pas dans la plage prédéfinie ou si les informations d'attribut sont incluses dans la liste prédéfinie, il est déterminé que la pluralité de dispositifs réseau est anormale.

7. Le système selon la revendication 6, dans lequel :
la pluralité de dispositifs réseau comprend un nœud principal et au moins un premier dispositif réseau ; le dispositif réseau spécifique est un quelconque premier dispositif réseau, et les autres dispositifs réseau comprennent le nœud principal et d'autres premiers dispositifs réseau ; et
le dispositif réseau spécifique est configuré pour envoyer les données de différence au nœud principal ; et le nœud principal est configuré pour mettre à jour les données de registre actuelles du nœud principal en les remplaçant par les données de registre après modification selon les données de différence et envoyer les données de différence après modification aux autres premiers dispositifs réseau ; ou
le dispositif réseau spécifique est configuré pour envoyer les données de registre après modification au nœud principal ; le nœud principal est configuré pour mettre à jour les données de registre actuelles du nœud principal en les remplaçant par les données de registre après modification, déterminer les données de différence selon les données de registre actuelles du nœud principal et les données de registre après modification, et envoyer les données de différence ou les données de registre après modification aux autres premiers dispositifs réseau ; ou
le dispositif réseau spécifique est configuré pour envoyer les données de différence ou les données de registre après modification au nœud principal et aux autres premiers dispositifs réseau.

8. Le système selon la revendication 7, comprenant en outre :
un deuxième dispositif réseau, qui est configuré pour être connecté au système de mise en réseau de dispositifs et envoyer un message de multidiffusion à la pluralité de dispositifs réseau, dans lequel :
le message de multidiffusion comprend un message d'adhésion ; et
tous les dispositifs réseau dans le système de mise en réseau de dispositifs sont configurés pour effectuer un processus d'arbitrage pour déterminer un nœud principal selon une règle d'arbitrage prédéfinie ; et tous les dispositifs réseau comprennent le deuxième dispositif réseau et une pluralité de dispositifs réseau recevant le message d'adhésion.

9. Le système selon la revendication 7, comprenant en outre :
un deuxième dispositif réseau, qui est configuré pour être connecté au système de mise en réseau de dispositifs et envoyer un message de multidiffusion à la pluralité de dispositifs réseau, dans lequel le message de multidiffusion comprend un message d'adhésion ; et
un nœud principal original, qui est configuré pour, en réponse au message d'adhésion, envoyer un message de réarbitrage aux autres dispositifs réseau que le nœud principal original dans le système de mise en réseau de dispositifs, dans lequel :
tous les dispositifs réseau dans le système de mise en réseau de dispositifs sont configurés pour effectuer un processus d'arbitrage pour déterminer un nœud principal selon une règle d'arbitrage prédéfinie, dans lequel tous les dispositifs réseau comprennent le nœud principal original et une pluralité de dispositifs réseau recevant le message de réarbitrage, ou tous les dispositifs réseau comprennent une pluralité de dispositifs réseau recevant le message de réarbitrage à l'exception du nœud principal original.

10. Le système selon la revendication 6, dans lequel :
le dispositif réseau spécifique est configuré pour déterminer si les données de registre du dispositif réseau spécifique comprennent plusieurs mêmes informations d'attribut ; et si les données de registre du dispositif réseau spécifique comprennent plusieurs mêmes informations d'attribut, déterminer si la pluralité de dispositifs réseau est anormale selon les informations de consommation correspondant aux mêmes informations d'attribut.
